# EUROPEAN PATENT APPLICATION

(11) **EP 2 159 119 A1**
(43) Date of publication of application: **03.03.2010**
(21) Application number: 09169050.3
(22) Date of filing: 31.08.2009
(51) Int. Cl.: B60W 10/06, B60W 10/20, F02N 11/08, B60W 10/30, B62D 5/30, B62D 5/06, B62D 5/065, B60W 20/00

(54) **Steering systems and methods for hybrid vehicles**

(30) Priority: 29.08.2008 US 202152
(71) Applicant: PACCAR INC, Bellevue, WA 98804 (US)
(72) Inventor: Kahn, William C., Corinth, TX 76210 (US); Marschall, Glen A., Denven, Iowa 50622 (US)
(74) Representative: Körber, Martin Hans

(57) **Abstract**

A steering system generally includes a steering gear for controlling a steer axle of the a hybrid vehicle in response to rotation of a steering wheel. The steering system also includes a power steering pump functionally connected to an internal combustion engine for supplying pressurized fluid to the steering gear. The steering system further includes an accumulator, a power steering controller, and a pressure sensor for monitoring the pressure of the accumulator.

In use, the steering system continuously monitors the pressure of the accumulator via the pressure sensor. In several instances, the steering system keeps track of whether the accumulator pressure exceeds an engine shut-down prohibition level and/or an engine restart level. From these signals, the internal combustion engine can be instructed to restart from its engine-off condition and/or the internal combustion engine can be prohibited operating in its engine-on condition to transition to its engine-off condition.

## Description

### BACKGROUND

The increasing demand to improve fuel economy, eliminate emissions, and reduce noise levels has driven the automotive market to develop a variety of propulsion mechanisms. As an alternative to the traditional internal combustion engine (ICE) powertrain the industry has developed a hybrid electric system powered by an electric traction motor(s) and an internal combustion engine. During varying driving conditions, hybrid electric vehicles (HEVs) will alternate between the separate power sources, depending on the most efficient manner of operation of each source.

While this provides for a more efficient operation and reduces carbon emissions, it is not without its problems. For example, power steering systems have become standard equipment on all large Class 8 over the highway trucks or tractors. These systems, as well as others, utilize power generated by the internal combustion engine in order to operate. For example, power steering pumps for steering systems or air compressors for braking systems, etc, are driven by the internal combustion engine.

In order to allow the HEV to shut-off the engine to improve fuel efficiency, reduce emissions, etc., a system not heretofore developed is needed to maintain the functionality of these systems and others. Embodiments of the present invention are directed to such systems.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In accordance with aspects of the present invention, a system is provided for use in a hybrid electric vehicle that includes at least one fuel powered engine having an engine-on condition and an engine-off condition. The system comprises an accumulator for storing hydraulic fluid under pressure, a hydraulic motor, and a fluid pump adapted to be driven by a fuel powered engine. The fluid pump is capable of supplying hydraulic fluid to the hydraulic motor and to the accumulator during an engine-on condition of the fuel powered engine. The system further comprises a controlling component for monitoring the pressure of the accumulator, wherein the controlling component generates a control signal that prohibits the fuel powered engine from transitioning from its engine-on condition to its engine-off condition if the pressure within the accumulator is below a threshold value.

In accordance with another aspect of the present invention, a hybrid vehicle is provided. The hybrid vehicle comprises a fuel powered engine having an engine-on condition and an engine-off condition, a motor, a first controlling component for controlling the operation of the fuel powered engine and the motor, an accumulator for storing power steering fluid under pressure, a sensor associated with the accumulator for generating signals indicative of the fluid pressure of the accumulator, a power steering gear having a hydraulic motor, and a power steering pump driven by the fuel powered engine in the engine-on condition. The power steering pump is capable of supplying power steering fluid to the power steering gear and to the accumulator during an engine-on condition of the fuel powered engine. The hybrid vehicle further includes a second controlling component that monitors the signals generated by the sensor and generates a control signal that instructs the first controlling component to maintain operation of the fuel powered engine in its engine-on condition when the pressure within the accumulator is below a threshold value.

In accordance with yet another aspect of the present invention, a method of maintaining power steering functionality is employed in a hybrid vehicle having a fuel powered engine having an engine-on condition and an engine-off condition, a motor, and a first controller for controlling the operation of the fuel powered engine and the motor. The method of maintaining the power steering functionality of the vehicle comprises the steps of: providing an accumulator that receives pressurized fluid from a fluid pump when the internal combustion engine in the engine-on condition, and transmits pressurized fluid to a steering gear in the engine-off condition; monitoring the pressure of the accumulator during engine-on and engine-off conditions; and prohibiting the vehicle from transitioning from the engine-on condition to the engine-off condition when the pressure within the accumulator is below a threshold value.

### DESCRIPTION OF THE DRAWINGS

The foregoing aspects and many of the attendant advantages of this invention will become more readily appreciated by reference to the following detailed description, when taken in conjunction with the accompanying drawings, wherein:
FIGURE 1 is a partial schematic diagram of one embodiment of a steering system formed in accordance with aspects of the present invention;
FIGURE 2 is a schematic diagram of one suitable vehicle in which the steering system of FIGURE 1 may be employed;
FIGURE 3 is a functional block diagrammatic view of one embodiment of a steering controller formed in accordance with aspects of the present invention;

### DETAILED DESCRIPTION

Embodiments of the present invention will now be described with reference to the drawings where like numerals correspond to like elements. Embodiments of the present invention are generally directed to steering systems suitable for use in vehicles, such as Class 8 trucks. More particularly, embodiments of the present invention are directed to steering systems suitable for use with vehicles of the hybrid type (e.g., gas-electric, diesel-electric, gas-hydraulic, diesel-hydraulic, etc.) that maintain power steering functionality during "engine off" conditions.

Although exemplary embodiments of the present invention will be described hereinafter with reference to a hybrid powered heavy duty truck, it will be appreciated that aspects of the present invention have wide application, and therefore, may be suitable for use with many other types of vehicles, including but not limited to light & medium duty vehicles, passenger vehicles, motor homes, buses, commercial vehicles, marine vessels, et, that are hybrid powered. Accordingly, the following descriptions and illustrations herein should be considered illustrative in nature, and thus, not limiting the scope of the present invention, as claimed.

Prior to discussing the details of various aspects of the present invention, it should be understood that the following description includes sections that are presented largely in terms of logic and operations that may be performed by conventional electronic components. These electronic components, which may be grouped in a single location or distributed over a wide area, can generally include processors, memory, storage devices, input/output circuitry, etc. It will be appreciated by one skilled in the art that the logic described herein may be implemented in a variety of configurations, including but not limited to, analog circuitry, digital circuitry, processing units, etc., and combinations thereof. In circumstances were the components are distributed, the components are accessible to each other via communication links.

In the following description, numerous specific details are set forth in order to provide a thorough understanding of exemplary embodiments of the present invention. It will be apparent to one skilled in the art, however, that many embodiments of the present invention may be practiced without some or all of the specific details. In some instances, well-known process steps have not been described in detail in order not to unnecessarily obscure various aspects of the present invention.

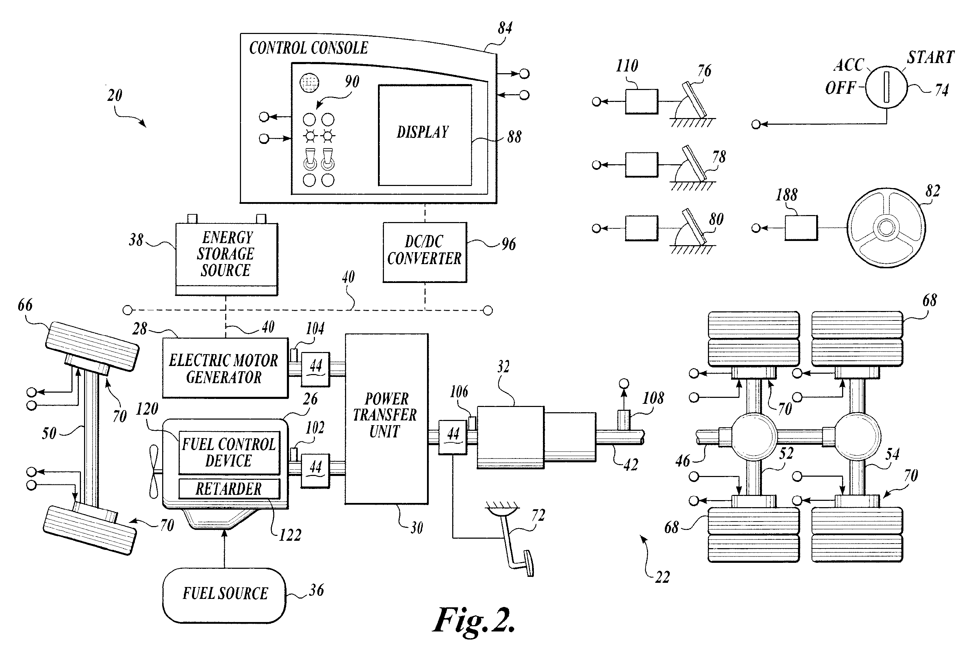

As briefly described above, embodiments of the present invention are directed to steering systems suitable for use in a vehicle. One suitable vehicle in which the steering systems may be employed will now be described in more detail with reference to FIGURE 2. Turning now to FIGURE 2, there is shown a vehicle 20, such as a Class 8 tractor, having one suitable embodiment of a parallel hybrid powertrain 22. The vehicle 20 depicted in FIGURE 2 represents one of the possible applications for the systems and methods of the present invention. It should be appreciated that aspects of the present invention transcend any particular type of land or marine vehicle employing a hybrid powertrain. Moreover, the hybrid powertrain 22 depicted in FIGURE 2 has a parallel configuration, although hybrid powertrains with series configurations, or combined hybrid configurations (i.e., hybrids that operate in some manner as a parallel hybrid and a serial hybrid) may also be employed.

One of ordinary skill in the art will appreciate that the hybrid powertrain 22 and associated subsystems/components may include many more components than those depicted in FIGURE 2. For the sake of brevity, these additional components have not be described herein. However, it is not necessary that all of these generally conventional components be shown or described in order to disclose an illustrative embodiment for practicing the present invention, as claimed.

In the embodiment shown in FIGURE 2, the hybrid powertrain 22 includes an internal combustion engine 26, an electric motor generator 28, a power transfer unit 30, and a transmission 32. The hybrid powertrain 22 also includes a fuel source 36 or the like that stores any suitable combustive fuel, such as gasoline, diesel, natural gas, alcohol, etc. In use, the internal combustion engine 26 receives fuel from the fuel source 36 and converts the energy of the fuel into output torque. The powertrain 22 further comprises an energy storage device 38 in the form of a high voltage battery, a bank of batteries or a capacitor. Alternatively, a device such as a fuel cell may be used in conjunction with a battery and/or capacitor to provide a source of electrical power for the powertrain 22. In use, the electric motor generator 28 can receive electrical energy from the energy storage device 38 via a high voltage DC bus 40 and converts the electrical energy into output torque. The electric motor generator 28 can also operate as a generator for generating electrical energy to be stored in the electrical storage device 38.

Still referring to FIGURE 2, the power transfer unit 30 operatively interconnects the internal combustion engine 26, the electric motor generator 28, and the transmission 32. The transmission 32 may be a manual transmission, an automated manual transmission, or an automatic transmission that includes multiple forward gears and a reverse gear operatively connected to an output shaft 42. The power transfer unit 30 is configured for selectively switching between multiple vehicle operating states or "modes," which include but are not limited to: 1) a state where only the output torque of the engine 26 is transmitted through the transmission 32 to the output shaft 42; 2) a state where only the output torque generated by the electric motor 28 is transferred through the transmission 32 to the output shaft 42; 3) a state where the output torque of the internal combustion engine 26 and the electrical motor generator 28 is combined and transferred through the transmission 32 to the output shaft 42; 4) a state where the internal combustion engine 26 transmits output torque to the output shaft 42 through the transmission 32 and transmits output torque to the electrical motor generator 28 so that the electrical motor generator 28 acts as a generator for generating electrical energy to charge the energy storage device 38; and 5) a regenerative braking state where the internal combustion engine 26 is decoupled from the power transfer unit 30, and the input torque generated by the rear wheels is transmitted through the transmission 32 to the power transfer unit 30, which transmits this input torque to the electrical motor generator 28 so that the electrical motor generator 28 acts as a generator for generating electrical energy to charge the energy storage device 38.

One or more clutch assemblies 44 may be positioned between the internal combustion engine 26 and electric motor generator 28 and the power transfer unit 30 and/or the transmission 32 to selectively engage/disengage the internal combustion engine 26 and/or the electric motor generator 28 from the power transfer unit 30 and/or the transmission 32. The one or more clutch assemblies 44 may be part of the power transfer unit 30 or may be discrete therefrom. In one embodiment, the power transfer unit 30 may include a planetary gear set conventionally arranged for carrying out the functions 1-4 described above. Of course, other types of power transfer units, including other gear sets and transmissions, may be employed. In another embodiment, the power transfer unit 30 and the transmission 32 may be arranged as a unitary device that provides both the functions of the power transfer unit 30 and that of the transmission 32. One type of unitary device that may be employed by the powertrain 22 is known in the art as a power split device.

The vehicle 20 also includes at least two axles such as a steer axle 50 and at least one drive axle, such as axles 52 and 54. The output shaft 42 of the transmission 32, which may include a vehicle drive shaft 46, is drivingly coupled to the drive axles 52 and 54 for transmitting the output torque generated by the internal combustion engine 26 and/or the electric motor generator 28 to the drive axles 52 and 54. The steer axle 50 supports corresponding front wheels 66 and the drive axles 52 and 54 support corresponding rear wheels 68, each of the wheels having service brake components 70. The service brake components 70 may include wheel speed sensors (not shown), electronically controlled pressure valves, and the like, to effect control of the vehicle braking system.

The vehicle 20 may also include conventional operator control inputs, such as a clutch pedal 72 (in some manual systems), an ignition or start switch 74, an accelerator pedal 76, a service brake pedal 78, a parking brake 80, and a steering wheel 82 to effect turning of the front wheels 66 of the vehicle 20. The vehicle 20 may further include a cab mounted operator interface, such as a control console 84, which may include any of a number of output devices 88, such as lights, graphical displays, speakers, gages, and the like, and various input devices 90, such as toggle switches, push button switches, potentiometers, or the like. To provide power to the control console 84, a DC/DC converter 96 is connected to the high voltage bus 40. The DC/DC converter 96 reduces the voltage it receives, and outputs power at this lower voltage to the control console 84. The D/C to D/C converter 96 can output power to other low voltage electrical devices on the vehicle 20. The DC/DC converter 96 may also condition the power prior to directing it to the low voltage electrical devices.

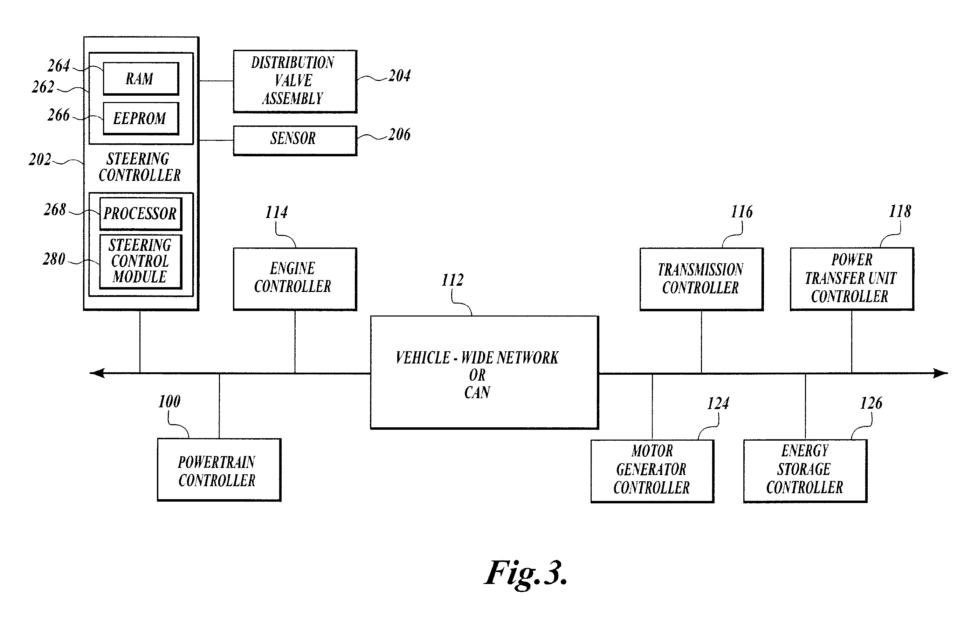

To control the various aspects of the hybrid powertrain 22, a powertrain controller 100 is provided. As shown in FIGURE 3, the powertrain controller 100 can be a dedicated controller for the hybrid powertrain 22 or can be incorporated in another general vehicle controller, such as a vehicle system controller (VSC). Although the powertrain controller 100 is shown as a single controller, it may include multiple controllers or may include multiple software components or modules embedded in a single controller. For example, the powertrain controller 100 could be a separate hardware device, or may include a separate powertrain control module (PCM), which could be software embedded within general purpose controller, such as a VSC.

In one embodiment, the powertrain controller 100 may control the operation of one or more of the following devices: the internal combustion engine 26; the electric motor generator 28; the power transfer unit 30; the transmission 32; the energy storage device 38, optional clutch assemblies 44, etc. In one embodiment, the powertrain controller 100 may include a programmable digital computer, microprocessor or the like that is configured to receive various input signals, including without limitation, the operating speeds of internal combustion engine 26 via sensor 102 and the electric motor generator 28 via sensor 104, transmission input speed via sensor 106, selected transmission ratio, transmission output speed via sensor 108 and vehicle speed via wheel speed sensors (not shown), throttle position via sensor 110, and state of charge (SOC) of the energy storage device 38. The powertrain controller 100 processes these signals and others accordingly to logic rules to control the operation of the hybrid powertrain 22. For example, to start or restart the internal combustion engine 26, the powertrain controller 100 may be programmed to signal delivery of fuel to the internal combustion engine 26 and to signal the operation of the electrical motor generator 28 or optional starter to start the engine. It will be appreciated that the powertrain 100 may receive these input signals directly from the associated sensor(s), devices, etc., or may receive the input signals from other vehicle subsystems, as will be described in more detail below.

To support this control, various devices (e.g., the internal combustion engine 26, the electric motor generator 28, etc.) controlled by the powertrain controller 100 may include their own controllers, which communicate with the powertrain controller 100 through a vehicle-wide network, also referred to as a controller area network (CAN) 112, as shown in FIGURE 3. Those skilled in the art and others will recognize that the CAN 112 may be implemented using any number of different communication protocols such as, but not limited to, Society of Automotive Engineer's ("SAE") J1587, SAE J1922, SAE J1939, SAE J1708, and combinations thereof. Alternatively, the aforementioned controllers may be software control modules contained within the powertrain controller 100 or other general purpose controllers residing on the vehicle. It will be appreciated, however, that the present invention is not limited to any particular type or configuration of powertrain controller 100, or to any specific control logic for governing operation of hybrid powertrain 22.

For example, an engine controller 114 may communicate with the powertrain controller 100 and may function to monitor and control various aspects of the operation of the internal combustion engine 26, including ignition timing (on some vehicles), fuel delivery, variable valve timing (if equipped) and the like. To that end, the engine controller 114 typically receives signals from a variety of sensors, including but not limited to the wheel speed sensors (not shown) of the brake components 70, the engine speed sensor 102, the accelerator pedal position sensor 110, etc., either directly or by other system or device controllers (i.e., the transmission controller 116, power transfer unit controller 118, the powertrain controller 100, etc.), processes such signals and others, and transmits a variety of control signals to devices including but not limited to fuel control devices 122 for selectively supplying fuel to the internal combustion engine 26, an engine retarder 124 such as a jake brake, etc. As will be described in more detail below, the engine controller 114 may transmit signals indicative of vehicle operational data (e.g., engine speed, throttle position, etc.) to the powertrain controller 100 or other system controllers via the CAN 112 and may receive control signals from the powertrain controller 100 or from controllers of other vehicle subsystems either directly or via CAN 112 to effect the operation of the internal combustion engine 26.

Similarly, the electric motor generator 28 may include one or more controllers 126 that sends and receives signals to and from the powertrain controller 100 and the electric motor generator 28 for controlling the direction of power flow to/from the electrical motor generator 28. The vehicle may include other controllers, such as an energy storage device controller 120, communicatively connected to the CAN 112.

As used herein, controllers, control units, control modules, program modules, etc., can contain logic for carrying out general or specific operational features of the vehicle 20. The logic can be implemented in hardware components, such as analog circuitry, digital circuitry, processing units, or combinations thereof, or software components having instructions which can be processed by the processing units, etc. Therefore, as used herein, the term "controlling component" can be used to generally described these aforementioned components, and can be either hardware or software, or combinations thereof, that implement logic for carrying out various aspects of the present invention.

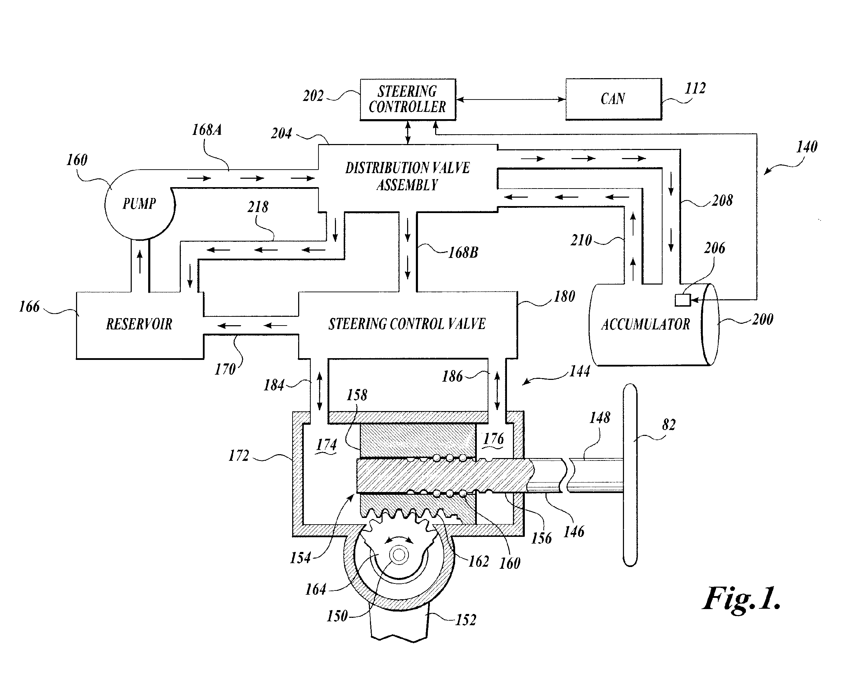

Referring now to FIGURES 1 and 2, in one embodiment of the present invention, the powertrain controller 100, either alone or in conjunction with other controllers can control the operation of the vehicle 20 in the following manner. It will be appreciated that the vehicle can be controlled to operated in any number of ways or modes. Additionally, it should be appreciated that the following description of the operation of the vehicle in accordance to one embodiment relates to a parallel hybrid vehicle, and that the operation of vehicles with series hybrid powertrains, combined hybrid powertrains, or power assist hybrids may be slightly different, but within the skill of those skilled in the art.

When it is desired to start the hybrid vehicle 20 from rest (i.e., parked), the ignition switch 74 is moved to the start position. Next, the vehicle operator chooses the appropriate gear, releases the parking brake 80, if set, lifts their foot off of the service brake pedal 78, and applies pressure on the accelerator pedal 76. At this time, the powertrain controller 100 monitors various hybrid powertrain operating parameters, for example, the SOC of the energy storage device 38 and the load state of the vehicle 20, and depending on the SOC of the energy storage device 38 and the load state of the vehicle (typically calculated by accelerator pedal position and/or vehicle speed), the powertrain controller 100 controls the operation of the electric motor generator 28 only ("electric launch mode"), the internal combustion engine only, or combines the output of both via the power transfer unit 30 ("blended torque mode") to provide motive force to the vehicle 20.

For example, if the powertrain controller 100 determines that the SOC of the energy storage device 38 is at a sufficient level with respect to the vehicle load state, the powertrain controller 100 operates the powertrain 22 in the electric launch mode. For example, in a low load state and/or a low vehicle speed, and a high SOC, the powertrain controller 100 operates solely in the electric launch mode. In the electric launch mode, the internal combustion engine is off (engine-off condition), and the powertrain controller 100 signals delivery of electrical energy from the energy storage device 38 to power the electrical motor generator 28. Upon receipt of electrical power from the energy storage device 38, the electric motor generator 28 acts as a motor to generate output torque for propelling the vehicle 20.

On the other hand, if the powertrain controller 100 determines that the SOC of the energy storage device 38 is low with respect to the calculated vehicle load state, the powertrain controller 100 operates the powertrain 22 either in the hybrid assist mode, also known as the "blended torque mode," or the engine only mode. In the blended torque mode, the power controller 100 signals delivery of electrical energy from the energy storage device 38 to power the electrical motor generator 28 and fuel delivery to the internal combustion engine 26 so as to be started by the electric motor generator 28, and then signals the internal combustion engine 26 and the energy storage device/electric motor generator to generate output torque, which is "blended" or combined by the power transfer unit 30 according to control signals from the powertrain controller 100. For example, in a medium load state where the powertrain controller 100 determines that improved fuel efficiency may be realized by operating in the blended torque mode, or if additional torque in needed from the electric motor generator 28 during, for example, rapid acceleration situations, the internal combustion engine 26, along with the electric motor generator 28 is operated by the powertrain controller 100 so that the generated output torque is combined by the power transfer unit 30 and sent to the drive axles 52 and 54 through the transmission 32.

It should also be appreciated that the vehicle 20 may start out in electric launch mode, but based on continuously monitored operating conditions of the powertrain, e.g., SOC and vehicle load, the powertrain controller 100 may determine that the internal combustion engine 26 is needed to meet the output demands of the vehicle 20. In this case, the powertrain controller 100 signals for the internal combustion engine 26 to be started by the electric motor generator 28 or a separate starter motor, and signals the appropriate components, e.g., power transfer unit 30, clutch assemblies 44, etc. to combine the output torque of the internal combustion engine 26 and the electric motor generator 28 for propelling the vehicle 20.

When the hybrid vehicle 20 is cruising (i.e. not accelerating), and the internal combustion engine 26 can meet the vehicle load demand, the powertrain controller 100 controls the operation of the internal combustion engine 26, the electric motor generator 28, and the power transfer unit 28 based on the SOC of the energy storage device 38. If the energy storage device SOC is low, the powertrain controller 100 operates the power transfer unit 30 to split the power from the internal combustion engine 26 between the drive axles 52, 54 and the electric motor generator 28 so that the electric motor generator 28 acts as a generator and charges the energy storage device 38. This is called the "energy storage device charging mode." If the SOC of the energy storage device 38 is high, the powertrain controller 100 may operate the internal combustion engine 26 solely to propel the vehicle, or may operate the power transfer unit 32 and the electric motor generator 28 in the blended torque mode, as described above.

At any time the powertrain controller 100 determines during vehicle operation that the SOC of the energy storage device 38 becomes equal to or lower than a threshold level, the internal combustion engine 26 is immediately driven, and the output torque of the internal combustion engine 26 is transmitted to the electrical motor generator 28 through the power transfer device 30. In this case, the electrical motor generator 28 is operated as a power generator to charge the energy storage device 38. This may occur during vehicle transport or idling situations as well.

The energy storage device 38 may also be charged during vehicle movement via the regenerative braking mode. That is, instead of using the brakes to slow or stop the vehicle 20, the electric motor generator 28 is used to slow the vehicle 20. At the same time, the energy from the rotating rear wheels 68 is transferred to the electric motor generator 28 via the transmission 32 and power transfer unit 30 (the internal combustion engine 26 is either in the engine-off mode or is decoupled from the power transfer unit 30 by the clutch assembly 44), which in turn, causes the electric motor generator 28 to act as a generator to charge the energy storage device 38.

Referring now to FIGURE 1, there is shown a schematic view of one embodiment of a steering system, generally designated 140, formed in accordance with aspects of the present invention. The steering system 140 is suitable for use in a vehicle, such as the hybrid vehicle 20 described above, for providing steering functionality to a hybrid vehicle. As will be described in more detail below, the steering system 140 is capable of maintaining power steering functionality to the hybrid vehicle during engine-off conditions.

As best shown in FIGURE 1, the steering system 140 generally includes a steering gear 144 for controlling the steer axle 50 (See FIGURE 2) in response to rotation of the steering wheel 82. In one embodiment, the steering gear 144 includes an input shaft 146 operatively connected to the steering wheel 80 via a steering shaft 148. An output shaft 150 of the steering gear 144 is operatively connected via a pitman arm 152 to the steer axle 50 (see FIGURE 2) for turning the front wheels 66.

In one embodiment, the steering gear 144 includes a recirculating ball assembly 154 for effecting rotation of the output shaft 150. The recirculating ball assembly 154 is comprised of an actuating shaft 156, a recirculating ball bearing block 158, and a plurality of ball bearings 160. The recirculating ball bearing block 158 is freely movably over the actuating shaft 156, where rotation of the actuating shaft 156 causes the recirculating ball bearing block 158 to move along the actuating shaft 156 in a direction dependent on rotational direction of the actuating shaft 156. The recirculating ball bearing block 158 is formed with a toothed rack 162 on one side, which engages a section gear 164 fixed for rotation with the output shaft 150. In this embodiment, the output shaft 150 is configured for connection to the pitman arm 152 in a conventional manner.

In accordance with aspects of the present invention, the steering system 140 of FIGURE 1 is configured as a power steering system. To that end, one embodiment of the steering system 140 includes a power steering pump 160 functionally connected to the internal combustion engine 26 (See FIGURE 2) in a known manner to draw fluid from a reservoir 166 and to deliver pressurized fluid to the steering gear 144 via supply line 168. Fluid used by the steering gear 144 is then returned to the reservoir 166 via return line 170. In the embodiment shown in FIGURE 1, the steering gear 144 comprises a hydraulic motor 172, which receives pressurized fluid from a power steering pump 160. The hydraulic motor 172 defines first and second sealed hydraulic motor chambers 174 and 176 on either side of the block 158 of the recirculating ball assembly 154. The first and second sealed hydraulic motor chambers 174 and 176 receive pressurized fluid to impart force onto the recirculating ball bearing block 158 to either assist or solely drive the recirculating ball bearing block 158 along the actuating shaft 156. Such movement along the actuation shaft affects movement of the sector gear 164, and thus, the output shaft 150, which in turn, causes the pitman arm 152 and connected steering linkage of the steer axle 50 to turn the front wheels 66. Two examples of a type of hydraulically assisted steering gear that may be practiced with the present invention are Model No. TAS65, commercially available from TRW Automotive, Livonia, Michigan, and Model No. M100, commercially available from R. H. Sheppard Company, Hanover, Pennsylvania.

To control the hydraulic motor 172 upon rotation of the steering wheel 82 by the vehicle operator, a control valve 180 is provided. The control valve 180 is configured to receive pressurized fluid from the power steering pump 160 via supply line 168, and to supply pressurized hydraulic fluid to either the first or second chambers from supply/return lines 184 and 186, respectively, depending on the direction of steering wheel rotation. The control valve 180 is further configured to return fluid from the other of the first or second chambers 172 or 174 (via the other of the supply/return lines 184 and 186) to the reservoir 166 via return line 170. In one embodiment, the control valve 180 may be electrically controlled based on output generated by a steering sensor 188 (See FIGURE 2), which measures the rotational magnitude and/or direction of the steering wheel 80 or associated steering shaft 148. In another embodiment, the control valve 180 is a conventional rotary valve of the closed center type integrally formed with the steering gear 144. One conventional closed center type rotary valve that may be practiced with embodiments of the present invention is described in U.S. Patent No. 7,152,627, the disclosure of which is hereby incorporated by reference. In this latter embodiment, the input shaft 146 of the steering gear 144 is connected to the actuating shaft 156 of the recirculating ball assembly 154 via a torsional bar, as known in the art.

While a steering gear of the recirculating ball-type has been shown in one embodiment of the present invention, it will be appreciated that the steering system 140 may use any conventional or future developed powered steering gears, including a powered steering gear of the rack and pinion type. It will be appreciated that different steer axles, steering components, etc., may be required for such steering gears, which can be configured by those skilled in the art.

Thus, when the internal combustion engine 26 is generating output torque, also known as the "engine-on condition", the power steering pump 160 is driven by an engine driven belt or chain, thereby supplying fluid from the reservoir 166 to the steering gear 144. On the other hand, when the internal combustion engine 26 is not generating torque, also known as the "engine-off condition," the steering pump 160 is not driven, and as a result, pressurized fluid is not supplied to the steering gear 144.

To address this deficiency, especially in a hybrid vehicle, the steering system 140 also provides power steering functionality to the steering gear 144 during the engine-off condition. To that end, the steering system 140 further includes an accumulator 200, a power steering controller 202, a distribution valve assembly 204, and a pressure sensor 206 that generates output signals indicative of the pressure level or pressure change in the accumulator 200. Due to safety concerns associated with the potential for the vehicle 20 to cease having power steering functionality during engine-off conditions, embodiments of the steering system 140 continuously monitor the pressure of the accumulator 200 via the pressure sensor 206. In several embodiment, the steering system 140 keeps track of whether the accumulator pressure exceeds a first threshold level or engine shut-down prohibition level and/or a second threshold level or engine restart level. From these signals, as will be described in more detail below, the powertrain controller 100 can instruct the internal combustion engine 26 to restart from its engine-off condition and/or prohibit the internal combustion engine 26 operating in its engine-on condition to transition to its engine-off condition.

Still referring to FIGURE 1, the components of the steering system 140 will be described in more detail. As best shown in FIGURE 1, the distribution valve assembly 204 is communicatively connected to the steering pump 160 via segment 168A of the supply line 168. The distribution valve 204 is also communicatively connected to the supply inlet of the control valve 180 via segment 168B of the supply line 168, and communicatively connected to the accumulator 200 via supply/return lines 208 and 210. While the supply/return lines 208 and 210 are shown as separate conduits in FIGURE 1, it will be appreciated that the supply/return lines may share a single conduit.

In one embodiment, the distribution valve assembly 204 comprises one or more solenoid controlled or other electronically controlled valves that are selectively operated to provide the following fluid delivery paths: 1) pressurized fluid generated by the power steering pump 160 during engine-on vehicle operation is supplied to the steering gear 144 and the accumulator 200 for storage; 2) pressurized fluid from the accumulator 200 is supplied to the steering gear 144 during engine-off vehicle operation. In other embodiments, the distribution valve assembly 204 may include mechanically actuated (spring or the like) valves configured and arranged to provide the functionality described above. In another embodiment, the distribution valve assembly 204 may include a pressure relief valve that can exhaust excess pressurized fluid to the reservoir 162 via return line 218.

Referring to FIGURES 1 and 3, the power steering controller 202 is connected in electrical communication with at least the pressure sensor 206, and in some embodiments, the distribution valve assembly 204. In operation, as will be described in more detail below, the power steering controller 202 receives signals from the pressure sensor 206, processes such signals and others, and depending on the processed signals, transmits suitable signals for maintaining the engine-on condition of the internal combustion engine 26 or to transition the internal combustion engine 26 from the engine-off condition to the engine-on condition (i.e., restart the engine). In several embodiments, the power steering controller 202 may also control the operation of the distribution valve assembly 204.

It will be appreciated that the sensor 206 may output its signals directly to the power steering controller 202, or may communicate with the power steering controller 202 via the CAN 112. It will be also appreciated that the power steering controller 202 may communicate with other electronic components of the vehicle 20 via the CAN 112 for collecting data from other electronic components to be utilized by the power steering controller 202. In one embodiment the engine controller 114 may monitor the speed of the internal combustion engine 26 of the vehicle via engine, wheel and/or transmission sensors, including the engine output speed sensor 102, and communicate such speeds to the power steering controller 202 via the CAN 112 so that the power steering controller 202 may adjust the operation of the distribution valve assembly 204 in relation to vehicle and/or engine speed. For example, at high engine speeds, the distribution valve assembly 204 can be operated to divert excess pressure from supply line segment 168A via exhaust line 218, if desired.

In several embodiments, the power steering controller 202, and any one of the various sensors, switches, actuators, etc., of the steering system 140 may contain logic rules implemented in a variety of combinations of hardware circuitry components and programmed microprocessors to effect control of the various vehicle systems and subsystems described herein. To that end, as further illustrated in FIGURE 3, one suitable embodiment of the power steering controller 202 may include a memory 262 with a Random Access Memory ("RAM") 264, and an Electronically Erasable, Programmable, Read-Only Memory ("EEPROM") 266, a processor 268, and a power steering module 280 for providing functionality to the steering system 140. The power steering module 280 includes executable instructions that provide at least the following functionality: 1) prohibit the internal combustion engine 26 from transitioning from the engine-on condition to the engine-off condition when certain power steering system operational parameters are present, as will be described in detail below. The module 280 may also prov ide general control over the distribution valve assembly 204, and may be able to restart the internal combustion engine 26 based on operating parameters of the energy storage device 38.

Referring now to FIGURE 1-3, one exemplary method of operation of the steering system 140 will be described in detail. Generally described, the power steering controller 202 begins to monitor the pressure sensor 206 during vehicle operation. At this time, the vehicle could be operating with the internal combustion engine 26 generating output torque (i.e., the engine-on condition). During the engine-on condition, the power steering pump 160 is being driven, thereby delivering pressurized fluid to the steering gear 144, and depending on, for example, vehicle speed, capacity of accumulator, etc., to the accumulator 200. If the accumulator 200 is at full capacity, which can either be determined via monitoring of the pressure sensor 206 or via operation of a mechanical actuating valve or the like, the distribution valve assembly 204 may operate to restrict delivery of pressurized fluid to the accumulator 200, and may route the fluid back to the reservoir 166 via line 218. It will be appreciated that operation of the relief valve or valves that divert pressurized fluid away from either the accumulator 200 or the steering gear 144 may be dependent on one or more operating conditions of the vehicle, such as engine speed.

The power steering controller 202 continues to monitor the pressure sensor 206. If the pressure reading from the pressure sensor 206 is somehow below the engine shut-off prohibition level, the power steering controller 202 generates signals and transmits such signals via the CAN 112 to the powertrain controller 100. The signals, when received by the powertrain controller 100, prohibit the powertrain controller 100 from transitioning the vehicle from the engine-on condition to the engine-off condition. F or example, as the vehicle 20 continues to operate in the engine-on condition, if a determination is made by the powertrain controller 100 that the vehicle 20 can save fuel by switching the operation of the internal combustion engine 26 from the engine-on to the engine-off condition (e.g., low speed, low vehicle load), the signals transmitted by the power steering controller 202 to the powertrain controller 100 indicating a pressure below the engine shut-off prohibition level prohibit the powertrain controller 100 from transitioning the vehicle 20 from the engine-on to the engine-off condition.

On the other hand, the vehicle 20 could be operating with the internal combustion engine 26 not developing output torque (i.e., engine-off condition). This may occur when the vehicle 20 is at rest, for example, at a stop light or the like, or could be operating at relatively low vehicle speeds or vehicles loads in which the electric motor generator 28 is providing the motive power for the vehicle (e.g., electric launch mode). In this condition, if the accumulator 200 contains fluid below a predetermined pressure level (hereinafter "restart engine level") as determined by pressure signals from the sensor 206 and processed by the power steering controller 202, the power steering controller 202 generates signals to be transmitted to the powertrain controller 100 in order for the powertrain controller 100 to signal an engine restart. As described above, this may include signaling the fuel delivery devices to deliver fuel to the internal combustion engine 26 and signaling the electric motor generator 28 or alternative starter to start the internal combustion engine 26, thereby transitioning the internal combustion engine 26 from the engine-off condition to the engine-on condition. In this way, delivery of pressured fluid to the steering gear 144 can be maintained, via operation of the power steering pump 160. The accumulator 200 can also be charged at this time, depending on vehicle speed, etc.

If the accumulator 200 contains fluid above the restart engine level as determined by pressure signals processed by the power steering controller 202, the distribution valve assembly 204 supplies pressurized fluid to the steering gear 144 so that the steering system 140 may continue to operate as normal (i.e., as it would operate with pressurized fluid being delivered by the power steering pump). In this engine-off condition, the accumulator 200 continues to supply pressurized fluid to the steering gear 144 for a set period of time based on accumulator capacity. It will be appreciated that the capacity of the accumulator 200 may be chosen based on the specific vehicle and intended application. At the same time, the power steering controller 202 continues to monitor the pressure signals from the sensor 206. If the power steering controller 206 determines that the pressure of the accumulator 200 has dropped below the restart engine level, the power steering controller 202 generates and transmits the appropriate restart signals to the powertrain controller 100, as described above.

As shown in FIGURE 1 and 3, the power steering controller 202 is a separate controller dedicated to the steering system 140. However, it will be appreciated that the power steering controller 202 may be a power steering control module, which could be software embedded within an existing on-board controller, such as the engine controller 114, a general purpose controller, such as a cab mounted controller, that controls multiple subsystems of the vehicle, or the powertrain controller 100. Similarly, the accumulator 200 is shown as a dedicated unit; however, the accumulator may be a general hydraulic accumulator that services a plurality of hydraulic motors, such as an accumulator utilized in a fuel-hydraulic hybrid vehicle.

The principles, representative embodiments, and modes of operation of the present invention have been described in the foregoing description. However, aspects of the present invention which are intended to be protected are not to be construed as limited to the particular embodiments disclosed. Further, the embodiments described herein are to be regarded as illustrative rather than restrictive. It will be appreciated that variations and changes may be made by others, and equivalents employed, without departing from the spirit of the present invention. Accordingly, it is expressly intended that all such variations, changes, and equivalents fall within the spirit and scope of the present invention, as claimed.

## Claims

1. A system for use in a hybrid electric vehicle that includes at least one fuel powered engine having an engine-on condition and an engine-off condition, the system comprising:
(a) an accumulator for storing hydraulic fluid under pressure;
(b) a hydraulic motor;
(c) a fluid pump adapted to be driven by a fuel powered engine, the fluid pump capable of supplying hydraulic fluid to the hydraulic motor and to the accumulator during an engine-on condition of the fuel powered engine; and
(d) a controlling component for monitoring the pressure of the accumulator, wherein the controlling component generates a control signal that prohibits the fuel powered engine from transitioning from its engine-on condition to its engine-off condition if the pressure within the accumulator is below a threshold value.

2. The system according to Claim 1, further comprising a steering gear that includes the hydraulic motor.

3. The system according to Claim 2, wherein the fluid pump is a power steering pump.

4. The steering system according to Claims 2 or 3, further comprising a control valve operatively connected between the steering gear and both the accumulator and the fluid pump.

5. The steering system according to Claims 1-4, wherein the controlling component is a software component, a hardware component, or combinations thereof.

6. The system according to Claims 1-5, wherein the controlling component generates a control signal that transitions the fuel powered engine from its engine-off condition to its engine-on condition if the pressure within the accumulator is below an engine restart value.

7. The system according to Claims 1-6, wherein the controlling component generates a control signal that prohibits the fuel powered engine from transitioning from its engine-on condition to its engine-off condition if the pressure within the accumulator is below a threshold value.

8. The vehicle according to Claim 4, wherein the control valve has at least three operating states, including: 1) directing pressurized fluid from the fluid pump to the steering gear; 2) directing pressurized fluid from the fluid pump to the steering gear and the accumulator, and 3) directing pressurized fluid from the accumulator to the steering gear.

9. The vehicle according to Claim 8, wherein the controlling component controls the operation of the control valve.

10. The vehicle according to Claims 1-9, wherein the first or second controlling component generates a control signal that transitions the fuel powered engine from its engine-off condition to its engine-on condition if the pressure within the accumulator is below an engine restart value.

11. In a hybrid vehicle having a fuel powered engine having an engine-on condition and an engine-off condition, a motor, and a first controller for controlling the operation of the fuel powered engine and the motor, a method of maintaining the power steering functionality of the vehicle, comprising the steps of:
providing an accumulator that receives pressurized fluid from a fluid pump when the internal combustion engine in the engine-on condition, and transmits pressurized fluid to a steering gear in the engine-off condition;
monitoring the pressure of the accumulator during engine-on and engine-off conditions;
prohibiting the vehicle from transitioning from the engine-on condition to the engine-off condition when the pressure within the accumulator is below a threshold value.

12. The method according to Claim 14, further comprising the step of:
transitioning the internal combustion engine from the engine-off condition to the engine-on condition if the pressure in the accumulator drops below a restart threshold level.
